# EUROPÄISCHE PATENTANMELDUNG

(11) **EP 4 052 773 A2**
(43) Veröffentlichungstag der Anmeldung: **07.09.2022**
(21) Anmeldenummer: 22152012.5
(22) Anmeldetag: 18.01.2022
(51) Int. Cl.: B01D 17/02, B01D 21/00, C02F 1/40

(54) **ABSCHEIDEEINRICHTUNG, VERFAHREN ZUR MONTAGE EINER SOLCHEN ABSCHEIDEEINRICHTUNG UND BEHÄLTER**

(30) Priorität: 19.01.2021 DE 102021101009
(71) Anmelder: ACO Ahlmann SE & Co. KG, 24782 Büdelsdorf (DE)
(72) Erfinder: Jäger, Matthias, 36100 Petersberg (DE); Lenke, Martin, 36433 Bad Salzungen (DE)
(74) Vertreter: Kilchert, Jochen

(57) **Zusammenfassung**

Die Erfindung betrifft eine Abscheideeinrichtung (10) zum Reinigen einer Flüssigkeit, insbesondere zum Abscheiden von Flüssigkeitsbestandteilen aus einem Flüssigkeitsgemisch, umfassend:
- wenigstens einen Behälter (11) mit einem Innenraum (12) zur Aufnahme von zu reinigender Flüssigkeit;
- wenigstens eine Zulaufeinrichtung (13) mit einer Längsachse (L), die mit dem Innenraum (12) des Behälters (11) zur Flüssigkeitsaufnahme fluidverbunden ist und um ihre Längsachse (L) drehbar ist, wobei die Zulaufeinrichtung (13) wenigstens einen Zulaufanschluss (14) aufweist, der sich geneigt zur Längsachse (L) erstreckt und durch Drehung der Zulaufeinrichtung (13) in unterschiedliche Drehpositionen (A, B, C) bringbar ist; und
- wenigstens eine Befestigungseinrichtung (15), insbesondere einen Flansch (16), zum Befestigen der Zulaufeinrichtung (13) an dem Behälter (11), wobei
im befestigten Zustand der Zulaufeinrichtung (13) der Zulaufanschluss (14) an einer der unterschiedlichen Drehpositionen (A, B, C) fixiert ist.

## Beschreibung

Die Erfindung betrifft eine Abscheideeinrichtung zum Reinigen einer Flüssigkeit, ein Verfahren zur Montage einer solchen Abscheideeinrichtung und einen Behälter für eine Abscheideeinrichtung.

Abscheideeinrichtungen sind beispielsweise in Großküchen, Tankstellen und anderen Betrieben notwendig, um Fette oder Leichtflüssigkeiten sowie Feststoffe aus (Ab-)Wasser abzuscheiden, bevor das (Ab-)Wasser in die Kanalisation gelangt.

Die Abscheideeinrichtungen sind dazu im eingebauten Zustand mit einer Zulaufleitung und einer Ablaufleitung verbunden, um verunreinigtes Wasser aufzunehmen beziehungsweise gereinigtes Wasser abzugeben. Bei der Montage der Abscheideeinrichtung wird herkömmlicherweise die Zu- bzw. Ablaufleitung an die entsprechenden Anschlüsse des Behälters der Abscheideeinrichtung angepasst. Aus dem Stand der Technik ist bekannt, dass derartige Behälteranschlüsse vorwiegend in ihrer Position fest angeordnet sind. Dies bringt die Problematik mit sich, dass der Verlauf der Zulaufleitung sowie der Ablaufleitung an die fest ausgerichteten Behälteranschlüsse angepasst werden müssen. Bei ungünstigen baulichen Gegebenheiten müssen die Leitungen daher oftmals aufwendig verlegt werden, um zu der entsprechenden Position der Behälteranschlüsse geführt werden zu können. Daraus resultiert ein erhöhter Platzbedarf für den Leitungsverlauf bis zu den Behälteranschlüssen sowie ein erhöhter Materialbedarf für die Leitungen. Durch die festen Anschlüsse am Behälter der Abscheideeinrichtung ist somit eine Montage der Anschlussleitungen nur mit erhöhtem Aufwand möglich.

Aus der US 7 186 346 B1 ist beispielsweise eine Abscheideeinrichtung für eine Küchenspüle bekannt, die einen Container mit einem drehbaren Auslassanschluss aufweist. Zwischen dem Auslassanschluss und einem Containerstutzen ist ein querliegendes Gelenk angeordnet, um das der Auslassanschluss verschwenkbar ist. Der Fluidstrom wird hier durch das Gelenk geführt, sodass eine aufwändige konstruktive Ausgestaltung des Gelenks zur Strömungsführung vorliegt. Des Weiteren ist ein erhöhter Dichtungsaufwand erforderlich.

Der Erfindung liegt die Aufgabe zu Grunde, eine Abscheideeinrichtung anzugeben, die durch eine verbesserte konstruktive Ausgestaltung eine erhöhte Funktionalität aufweist und einfach montierbar ist. Der Erfindung liegt ferner die Aufgabe zu Grunde, ein Verfahren zur Montage einer solchen Abscheideeinrichtung und einen Behälter für eine Abscheideeinrichtung anzugeben.

Erfindungsgemäß wird diese Aufgabe im Hinblick auf die Abscheideeinrichtung durch den Gegenstand des Anspruchs 1 gelöst. Hinsichtlich des Verfahrens und des Behälters wird die vorstehend genannte Aufgabe jeweils durch den Gegenstand des Anspruch 14 (Verfahren) und des Anspruchs 15 (Behälter) gelöst.

Konkret wird die Aufgabe durch eine Abscheideeinrichtung zum Reinigen einer Flüssigkeit, insbesondere zum Abscheiden von Flüssigkeitsbestandteilen aus einem Flüssigkeitsgemisch gelöst, wobei die Abscheideeinrichtung Folgendes umfasst:
- wenigstens einen Behälter mit einem Innenraum zur Aufnahme von zu reinigender Flüssigkeit;
- wenigstens eine Zulaufeinrichtung mit einer Längsachse, die mit dem Innenraum des Behälters zur Flüssigkeitsaufnahme fluidverbunden ist und um die Längsachse drehbar ist. Die Zulaufeinrichtung weist wenigstens einen Zulaufanschluss auf, der sich geneigt zur Längsachse erstreckt und durch Drehung der Zulaufeinrichtung in unterschiedliche Drehpositionen bringbar ist; und
- wenigstens eine Befestigungseinrichtung, insbesondere einen Flansch, zum Befestigen der Zulaufeinrichtung an dem Behälter.

Im befestigten Zustand der Zulaufeinrichtung ist der Zulaufanschluss an einer der unterschiedlichen Drehpositionen fixiert.

Die Erfindung hat verschiedene Vorteile. Durch die um ihre Längsachse drehbare Zulaufeinrichtung ist der Zulaufanschluss in unterschiedlichen Drehpositionen in Bezug auf die Längsachse bringbar. Mit anderen Worten ist der Zulaufanschluss um die Längsachse ausrichtbar. Dadurch kann der Zulaufanschluss bei der Montage abhängig von der Einbausituation der Abscheideeinrichtung, d.h. von den baulichen Gegebenheiten des Montageortes derart ausgerichtet werden, dass eine Zulaufleitung zum Zuführen der verunreinigten Flüssigkeit, insbesondere von Abwasser, zur Zulaufeinrichtung im montierten Zustand einen verbesserten Leitungsverlauf aufweist. Die Zulaufleitung ist somit bei der Montage mit verringertem Material- und Platzbedarf verlegbar.

Durch die Drehbarkeit der Zulaufeinrichtung weist die Abscheideeinrichtung eine erhöhte Funktionalität auf. Die Abscheideeinrichtung stellt eine verbesserte Anschlussmöglichkeit zur Verfügung, sodass die Montage mit einem Zulaufleitungssystem vereinfacht ist.

Der Zulaufanschluss ist im befestigten Zustand der Zulaufeinrichtung an einer der unterschiedlichen Drehpositionen fixiert. Mit anderen Worten ist die Zulaufeinrichtung durch die Befestigungseinrichtung an dem Behälter derart festgesetzt, dass der Zulaufanschluss an einer der unterschiedlichen Drehpositionen fixiert ist. Die unterschiedlichen Drehpositionen des Zulaufanschlusses sind um die Längsachse verteilt. Bevorzugt liegen die unterschiedlichen Drehpositionen um die Längsachse in einer gemeinsamen Ebene. Der Zulaufanschluss kann stufenlos und nach einem Drehraster um die Längsachse ausgerichtet werden.

Im befestigten Zustand ist die Zulaufeinrichtung an dem Behälter durch die Befestigungseinrichtung befestigt. Über die Befestigungseinrichtung ist somit nicht nur die Zulaufeinrichtung in ihrer Position in Bezug auf den Behälter festgelegt, sondern auch der Zulaufanschluss. Mit anderen Worten fixiert die Befestigungseinrichtung den Zulaufanschluss an einer der unterschiedlichen Drehpositionen indirekt. Die Befestigungseinrichtung ist vorzugsweise durch einen Flansch, der an der Zulaufeinrichtung angeordnet ist. Der Flansch kann mit der Zulaufeinrichtung fest verbunden sein. Der Flansch kann alternativ an der Zulaufeinrichtung lose angeordnet sein. Mit anderen Worten kann der Flansch ein Losflansch sein.

Die Längsachse kann auch als Rotationsachse der Zulaufeinrichtung bezeichnet werden. Bevorzugt verläuft die Längsachse in Einbaulage senkrecht. Andere Lagen der Längsachse in Einbaulage sind möglich.

Der Zulaufanschluss ist Teil der Zulaufeinrichtung und in Bezug auf die Längsachse geneigt ausgerichtet. Bevorzugt ist Zulaufanschluss zur Längsachse senkrecht angeordnet. Es ist alternativ möglich, dass der Zulaufanschluss in Bezug auf die Längsachse winkelig, insbesondere schrägverlaufend, ausgerichtet ist.

Generell ist der Zulaufanschluss dazu ausgebildet, um mit einer externen Zulaufleitung zur Aufnahme von zu reinigender Flüssigkeit verbunden zu werden. Der Zulaufanschluss kann rohrförmig ausgebildet sein. Es ist möglich, dass der Zulaufanschluss eine durch ein Profilrohr gebildet ist. Andere Formen des Zulaufanschlusses sind möglich.

Bevorzugte Ausführungsformen der Erfindung sind in den Unteransprüchen angegeben.

Bei einer bevorzugten Ausführungsform ist die Zulaufeinrichtung um die Längsachse derart drehbar, dass der Zulaufanschluss an wenigstens zwei Drehpositionen fixierbar ist. Besonders bevorzugt sind insgesamt drei Drehpositionen um die Längsachse verteilt vorgesehen, an denen der Zulaufauslass fixierbar ist. Hier ist vorteilhaft, dass der Zulaufanschluss bei einem Montagevorgang durch Drehung der Zulaufeinrichtung um die Längsachse bezogen auf einen Leitungsverlauf einer Zulaufleitung entsprechend ausgerichtet werden kann, wodurch die Montage vereinfacht ist.

Bei einer weiteren bevorzugten Ausführungsform ist der Zulaufanschluss im ausgerichteten Zustand an einer der unterschiedlichen Drehpositionen angeordnet, die zu wenigstens einer benachbarten Drehposition im Wesentlichen um 90° drehversetzt ist. Mit anderen Worten sind wenigstens zwei unterschiedliche Drehpositionen 90° um die Längsachse voneinander drehversetzt. Es ist möglich, dass wenigstens zwei benachbarte Drehpositionen 45°, insbesondere 30°, voneinander drehversetzt sind. Bevorzugt ist der Zulaufanschluss an drei unterschiedlichen Drehpositionen ausrichtbar, wobei die jeweils zwei benachbarten Drehpositionen um 90° versetzt sind. Die unterschiedlichen, insbesondere benachbarten, Drehpositionen liegen bevorzugt in einem Winkelbereich, insbesondere Drehbereich, von 0° bis 180°. Mit anderen Worten können die unterschiedlichen Drehpositionen einen Winkelbereich um die Längsachse aufspannen, der 0° bis 180° beträgt.

Durch den Drehversatz von 90°, 45° und/oder 30° der unterschiedlichen Drehpositionen sind standardisierte Leitungsbauteile, wie beispielsweise Rohrbögen mit 90°, 45° oder 30°, bei dem Anschließen einer externen Zulaufleitung verwendbar, wodurch die Montage weiter vereinfacht ist. Des Weiteren werden durch die Vermeidung von Sonderteilen, die nicht genormte Winkel bzw. Maße aufweisen, Kosten eingespart.

Bevorzugt weist die Zulaufeinrichtung wenigstens einen Lüftungsanschluss auf, der im ausgerichteten Zustand des Zulaufanschlusses mit dem Innenraum des Behälters zur Durchlüftung fluidverbunden ist. Im ausgerichteten Zustand ist der Zulaufanschluss an einer der Drehpositionen fixiert. Der Lüftungsanschluss ist Teil der Zulaufeinrichtung. Im befestigten Zustand der Zulaufeinrichtung ist der Lüftungsanschluss mit dem Innenraum des Behälters verbunden, sodass eine Durchlüftungsverbindung des Innenraums über die Zulaufeinrichtung besteht. Dadurch ist ein Kreislauf zur Durchlüftung des Innenraums gebildet. Dies hat den Vorteil, dass im Betrieb im Innenraum eine Luftzirkulation erfolgt und somit eine verbesserte Atmosphäre im Behälter herrscht.

Vorzugsweise weist die Zulaufeinrichtung mehrere Lüftungsanschlüsse auf. Die Lüftungsanschlüsse können voneinander einen Drehversatz um die Längsachse der Zulaufeinrichtung aufweisen, der dem Drehversatz zwischen den unterschiedlichen Drehpositionen entspricht. Konkret kann die Anzahl der Lüftungsanschlüsse der Anzahl der unterschiedlichen Drehpositionen des Zulaufanschlusses sein. Hier ist vorteilhaft, dass an jeder unterschiedlichen Drehposition des Zulaufanschlusses einer der Lüftungsanschlüsse mit dem Innenraum des Behälters zur Durchlüftung fluidverbunden ist. Der Lüftungsanschluss kann ein Rohrteil sein.

Vorzugsweise weist die Zulaufeinrichtung insgesamt drei Lüftungsanschlüsse auf. Weitere vorzugsweise sind jeweils zwei benachbarte Lüftungsanschlüsse um 90° in Bezug auf die Längsachse drehversetzt. Bevorzugt liegt wenigstens einer der mehreren Lüftungsanschlüsse mit dem Zulaufanschluss in einer, insbesondere in Einbaulage senkrechten, Ebene.

Bevorzugt weist die Zulaufeinrichtung wenigstens ein Behältereinlaufrohr auf, das sich entlang der Längsachse erstreckt und an dem der Zulaufanschluss und/oder der Lüftungsanschluss angeordnet sind/ist. Hier ist die Längsachse die Mittelachse des Behältereinlaufrohres. Mit anderen Worten umfasst das Behältereinlaufrohr die Längsachse. Vorzugsweise sind der Zulaufanschluss und der Lüftungsanschluss an dem Behältereinlaufrohr angeordnet, wobei beide Anschlüsse zur Längsachse geneigt, insbesondere senkrecht verlaufen. Es ist möglich, dass lediglich der Zulaufanschluss an dem Behältereinlaufrohr angeordnet ist. Das Behältereinlaufrohr ist mit dem Innenraum des Behälters fluidverbunden, sodass im Betrieb durch den Zulaufanschluss zu reinigende Flüssigkeit über das Behältereinlaufrohr in den Innenraum des Behälters strömt. Mit anderen Worten ist der Zulaufanschluss mit dem Innenraum des Behälters durch das Behältereinlaufrohr fluidverbunden. Am Behältereinlaufrohr ist bevorzugt die Befestigungseinrichtung am Außenumfang angeordnet.

Die Zulaufeinrichtung bildet somit einen Anschlussturm, wobei an dem Behältereinlaufrohr als Turmbasis der Zulaufanschluss und/oder der Lüftungsanschluss zur Längsachse geneigt angeordnet sind. Die Zulaufeinrichtung weist somit eine einfache konstruktive Form auf, die zusätzlich zum Vorteil der Kosteneinsparung die Montage erleichtert.

Bei einer bevorzugten Ausführungsform weist der Behälter einen Behälterkopf, insbesondere ein Kopfsegment, mit wenigstens einen Absatz auf, in dem die Zulaufeinrichtung zumindest teilweise versenkt angeordnet ist. Mit anderen Worten weist der Behälter in einen Behälterkopf einen Absatz mit einem Absatzboden auf, an dem die Zulaufeinrichtung angeordnet ist. Der Absatz ist vorzugsweise von einer Oberkante des Behälterkopfs ausgehend in proximaler Richtung ausgebildet. In Einbaulage kann der Absatz eine vertikale Stufe bilden, sodass die Zulaufeinrichtung in Vertikalrichtung nach unten versetzt ist. Dadurch wird eine kompakte Bauform der Abscheideeinrichtung realisiert, wodurch eine bauseitige Anordnung der Abscheidereinrichtung erleichtert ist.

Vorzugsweise ist der Absatz derart ausgebildet, dass der Zulaufanschluss in einem Drehbereich von 0° bis 180° um die Längsachse verschwenkbar ist. Mit anderen Worten bildet der Absatz mit einer Seitenwand eine seitliche Begrenzung für den Zulaufanschluss, die den maximalen Schwenkwinkel um die Längsachse definiert. Dies hat den Vorteil, dass durch den Drehbereich von 0° bis 180° ein großer Winkelbereich zur Verfügung gestellt wird, in dem der Zulaufanschluss ausgerichtet werden kann.

Bei einer bevorzugten Ausführungsform weist die Abscheideeinrichtung wenigstens eine Versorgungseinheit zum Versorgen des Behälters und/oder wenigstens einer weiteren Komponente, insbesondere eine Reinigungspumpe, mit Frischwasser auf. Die Versorgungseinheit umfasst wenigstens einen Frischwasseranschluss und eine Siphoneinrichtung, durch die der Frischwasseranschluss mit dem Innenraum des Behälters flüssigkeitsübertragend verbunden ist. Hier ist vorteilhaft, dass der Frischwasseranschluss und die Siphoneinrichtung eine gemeinsame Einheit bilden. In der Siphoneinrichtung ist im Betrieb ein ständiger Wasserspiegel vorhanden, der eine Geruchabschirmende Barriere zwischen dem Innenraum des Behälters und dem Frischwasseranschluss bildet. Mit anderen Worten bildet die Siphoneinrichtung einen Geruchsverschluss, sodass keine unangenehmen Gerüche aus dem Innenraum des Behälters durch den Frischwasseranschluss nach außen gelangen.

Vorzugsweise wird durch den Frischwasseranschluss dem Innenraum des Behälters kontinuierlich frisches Wasser zugeführt. Dazu ist der Frischwasseranschluss bevorzugt mit wenigstens einer Frischwasserzuleitung verbunden.

Bevorzugt weist die Siphoneinrichtung wenigstens einen Behälteranschluss auf, der durch den die Siphoneinrichtung mit dem Behälter formschlüssig verbunden ist. Durch den Behälteranschluss ist bevorzugt der Frischwasseranschluss mit dem Innenraum des Behälters zum Zuführen von Wasser fluidverbunden. Die Siphoneinrichtung kann in den Behälter eingesteckt oder eingerastet sein. Der Behälter kann, insbesondere am Behälterkopf, eine Vertiefung mit einer Durchgangsöffnung für die Siphoneinrichtung aufweisen, in die die Siphoneinrichtung eingehängt ist. Dies hat den Vorteil, dass die Vertiefung bzw. die Durchgangsöffnung für die formschlüssige Verbindung bereits beim Herstellungsprozess, bspw. in einem Rotationsformprozess, des Behälters ausgebildet werden kann. Mit anderen Worten kann die Vertiefung bzw. die Durchgangsöffnung mit dem Behälter integral ausgebildet sein. Die Vertiefung kann eine Ausnehmung, insbesondere eine Nische, bilden, die an einem Behälterrand ausgebildet ist.

Besonders bevorzugt ist die Siphoneinrichtung durch den Behälteranschluss werkzeuglos, insbesondere per Hand, in eine Wandung des Behälters, insbesondere in den Behälterkopf, einsteckbar oder eingesteckt. Dazu kann die Siphoneinrichtung eine Anschlussnase aufweisen, die in die Wandung, insbesondere am Behälterkopf, in den Behälteranschluss eingesteckt ist und durch die der Frischwasseranschluss mit dem Innenraum des Behälters fluidverbunden ist. Die Versorgungseinheit ist dadurch schnell und einfach am Behälter der Abscheideeinrichtung montierbar.

Bei einer Ausführungsform ragt der Frischwasseranschluss in die Siphoneinrichtung zumindest teilweise ein. Die Siphoneinrichtung umfasst einen Siphon, der zwischen dem Frischwasseranschluss und dem Behälteranschluss angeordnet ist, um im Betrieb den ständig stehenden Wasserspiegel zu realisieren. Der Frischwasseranschluss kann als Einsteckrohr in die Siphoneinrichtung einragen. Zusätzlich kann der Frischwasseranschluss wenigstens einen trichterförmigen Abschnitt zur Aufnahme von frischem Wasser aufweisen.

Bei einer bevorzugten Ausführungsform weist der Behälter ein Bodensegment, ein Kopfsegment, das insbesondere den Behälterkopf bildet, und wenigstens ein dazwischen angeordnetes Zwischensegment auf, die eine gemeinsame Längsachse umfassen und den Innenraum des Behälters fluidabdichtend umschließen, wobei die Zulaufeinrichtung an wenigstens einem der Segmente angeordnet ist. Mit anderen Worten ist der Behälter in Segmentbauweise ausgestaltet. Dies erhöht die Variabilität der Abscheideeinrichtung. Dadurch sind durch unterschiedliche Segmentgrößen, bspw. eines Zwischensegments oder mehrerer Zwischensegmente, verschiedene Fassungsvermögen der Abscheideeinrichtung realisierbar. Die Funktionalität sowie die Variabilität der Abscheideeinrichtung ist dadurch erhöht.

Der Behälter ist in Einbaulage bevorzugt stehend angeordnet. Mit anderen Worten ist in Einbaulage der Behälterkopf bevorzugt oben angeordnet. Vorzugsweise ist in Einbaulage des Behälters in Vertikalrichtung das Kopfsegment oberhalb und das Bodensegment unterhalb des Zwischensegments angeordnet. Eine liegende Anordnung des Behälters in Einbaulage ist möglich.

Der Behälter ist im Wesentlichen zylindrisch, insbesondere rund ausgebildet. Die einzelnen Segmente sind miteinander fluidabdichtend lösbar verbunden. Vorzugsweise weisen die Segmente jeweils an einem offenen Ende wenigstens eine Verbindungsstelle auf, an der die Segmente mit einem jeweils benachbarten Segment verbunden sind. Die Verbindungsstelle kann am jeweiligen Segmentumfang zumindest abschnittsweise umlaufend ausgebildet sein. Die Segmente sind bevorzugt an der Verbindungsstelle miteinander verschraubt. Zusätzlich können die Segmente an der Verbindungsstelle formschlüssig miteinander verbunden sein.

Der Behälter bzw. das Kopfsegment und/oder das Bodensegment und/oder das Zwischensegment können jeweils aus linearem Polyethylen mit niedriger Dichte (PE-LLD) bestehen.

Besonders bevorzugt sind das Bodensegment und/oder das Kopfsegment und/oder das Zwischensegment jeweils rotationsgeformt. Vorzugsweise sind das Kopfsegment und das Zwischensegment und das Bodensegment jeweils separat durch Rotationsformen ausgebildet. Die Segmente sind also einzeln rotationsgeformt. Die Herstellung der Segmente durch ein anderes Verfahren ist möglich. Die Segmente sind vorzugsweise jeweils im Querschnitt kreisringförmig ausgebildet. Das Rotationsformverfahren hat den Vorteil, dass die einzelnen Segmente in einem einzigen formgebenden Verfahrensschritt kostengünstig herstellbar sind.

Nach dem nebengeordneten Anspruch 14 betrifft die Erfindung ein Verfahren zur Montage einer erfindungsgemäßen Abscheideeinrichtung, bei dem die Zulaufeinrichtung an dem Behälter angeordnet wird und anschließend um ihre Längsachse derart gedreht wird, dass der Zulaufanschluss an einer der unterschiedlichen Drehpositionen ausgerichtet wird, wobei an der ausgerichteten Drehposition des Zulaufanschlusses die Zulaufeinrichtung durch die Befestigungseinrichtung an dem Behälter fixiert wird.

Nach dem nebengeordneten Anspruch 15 betrifft die Erfindung einen Behälter für eine Abscheideeinrichtung zur Aufnahme und Abgabe von Flüssigkeiten, insbesondere für eine erfindungsgemäße Abscheideeinrichtung, die Folgendes umfasst:
- ein Bodensegment, ein Kopfsegment und wenigstens ein dazwischen angeordnetes Zwischensegment, die eine gemeinsame Längsachse umfassen und einen Innenraum des Behälters umschließen;
- wenigstens einen Zulaufanschluss und wenigstens einen Ablaufanschluss, die jeweils mit dem Innenraum fluidverbunden sind, um Flüssigkeiten zuzuführen und aus diesem abzuführen; und
- wenigstens einen Funktionsanschluss für Funktionsmittel, insbesondere für eine Geruchsverschlusseinrichtung.

Das Bodensegment, das Kopfsegment und das Zwischensegment sind jeweils rotationsgeformt und an jeweils einem entlang der Längsachse offenen Ende mit dem benachbarten Segment fluidabdichtend lösbar verbunden. Die Verbindung der einzelnen Segmente miteinander kann mittels wenigstens einer Schraubverbindung erfolgen.

Der erfindungsgemäße Behälter kann alternativ als Biologiebehälter oder Regenwasserbehälter eingesetzt werden. Weitere alternative Anwendungsfälle sind möglich.

Hinsichtlich des Verfahrens sowie des Behälters wird auf die im Zusammenhang mit der Abscheideeinrichtung erläuterten Vorteile verwiesen. Darüber hinaus kann das Verfahren sowie der Behälter alternativ oder zusätzlich einzelne oder eine Kombination mehrerer zuvor in Bezug auf die Abscheideeinrichtung genannter Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie die erfindungsgemäße Abscheideeinrichtung sowie der erfindungsgemäße Behälter ausgestaltet sein können.

In diesen zeigen,
- Fig. 1: eine perspektivische Darstellung einer Abscheideeinrichtung nach einem bevorzugten erfindungsgemäßen Ausführungsbeispiel;
- Fig. 2: eine perspektivische Darstellung einer Zulaufeinrichtung der Abscheideeinrichtung nach Fig. 1;
- Fig. 3: eine perspektivische Darstellung einer Versorgungseinheit an einem Kopfsegment der Abscheideeinrichtung nach Fig. 2;
- Fig. 4: eine Seitenansicht einer Siphoneinrichtung der Versorgungseinheit nach Fig. 3;
- Fig. 5: einen Längsschnitt durch die Siphoneinrichtung nach Fig. 4;
- Fig. 6: einen Längsschnitt durch die Abscheideeinrichtung nach Fig. 1;
- Fig. 7: einen Längsschnitt durch einen Behälter nach einem erfindungsgemäßen Ausführungsbeispiel; und
- Fig. 8: einen Längsschnitt durch einen Behälter nach einem weiteren erfindungsgemäßen Ausführungsbeispiel.

Im Folgenden werden für gleiche und gleich wirkende Teil dieselben Bezugsziffern verwendet.

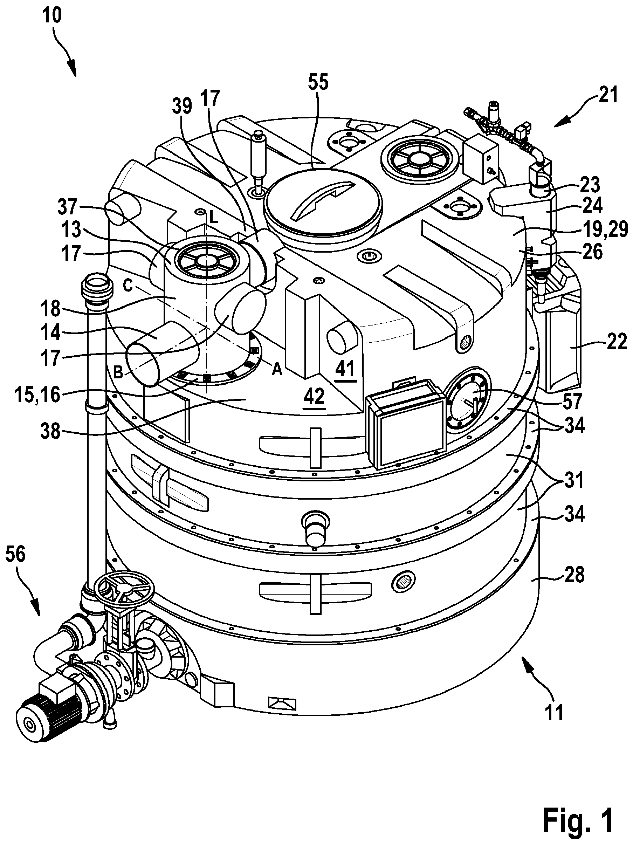

Fig. 1 zeigt eine Abscheideeinrichtung 10 zur Reinigung von Flüssigkeiten nach einem erfindungsgemäßen Ausführungsbeispiel. Die Abscheideeinrichtung 10 ist dazu ausgebildet, Flüssigkeitsbestandteile, wie zum Beispiel Fette oder Leichtflüssigkeiten, aus einem Flüssigkeitsgemisch abzutrennen. Leichtflüssigkeiten sind Flüssigkeiten mit einer geringeren Dichte als Wasser und können beispielsweise Öle, Benzin und/oder Diesel sein.

In der Praxis kommen derartige Abscheideeinrichtungen 10 häufig zum Abscheiden von Fetten/Leichtflüssigkeiten aus Abwasser zum Einsatz, um das Abwasser zu reinigen und anschließend in ein an die Abscheideeinrichtung 10 angeschlossenes Leitungssystem, insbesondere Kanalsystem abzuführen. Im Folgenden wird das Flüssigkeitsgemisch generell als Abwasser bezeichnet.

Die Abscheideeinrichtung 10 weist einen Behälter 11 mit einem Innenraum 12 zur Aufnahme von zu reinigendem Abwasser auf. In dem Innenraum 12 findet die Abtrennung von Fetten und/oder Leichtflüssigkeiten aus dem Abwasser statt. Der Behälter 11 ist in Segmentbauweise ausgestaltet. Der Behälter 11 umfasst ein Bodensegment 28, ein Kopfsegment 29 und zwei Zwischensegmente 31. Die Zwischensegmente 31 sind zwischen dem Bodensegment 28 und dem Kopfsegment 29 angeordnet. Zwischen dem Bodensegment 28 und dem Kopfsegment 29 können alternativ ein einzelnes Zwischensegment 31 oder mehr als zwei Zwischensegmente 31 angeordnet sein. Die Segmente 28, 29, 31 weisen eine gemeinsame Längsachse, insbesondere Mittelachse auf. Die Segmente 28, 29, 31 umschließen den Innenraum 12 des Behälters 11. Konkret schließen die Segmente 28, 29, 31 den Innenraum 12 des Behälters 11 fluidabdichtend ein.

Das Bodensegment 28 und das Kopfsegment 29 weisen jeweils ein offenes Ende 33 auf. Das jeweilige Zwischensegment 31 weist zwei entlang der Längsachse einander gegenüberliegende offene Enden 33 auf. Die Segmente 28, 29, 31 umfassen an den offenen Enden 33 jeweils eine Verbindungsstelle 34, an der die Segmente 28, 29, 31 miteinander lösbar verbunden sind. Wie in Fig. 1 zu erkennen ist, weist die Verbindungsstelle 34 eine Flanschverbindung auf, die die Segmente 28, 29, 31 umläuft. Bei der Montage werden die einzelnen Segmente 28, 29, 31 mit den Verbindungsstellen 34 aneinander angeordnet und miteinander verbunden. Konkret sind die Segmente 28, 29, 31 lösbar miteinander verbunden. Die Segmente 28, 29, 31 sind an der jeweiligen Verbindungsstelle 34 miteinander verschraubt. Zusätzlich oder alternativ können die Segmente 28, 29, 31 an den jeweiligen Verbindungsstellen 34 ineinander formschlüssig eingreifen.

Bei der Abscheideeinrichtung 10 gemäß Fig. 1 ist besonders vorteilhaft, dass die Segmente 28, 29, 31 des Behälters 11 durch ein Rotationsformverfahren ausgebildet sind. Mit anderen Worten sind die Segmente 28, 29, 31 einzeln rotationsgeformt ausgestaltet. Das Bodensegment 28, das Kopfsegment 29 und das Zwischensegment 31 sind jeweils durch Rotationsformen separat ausgebildet.

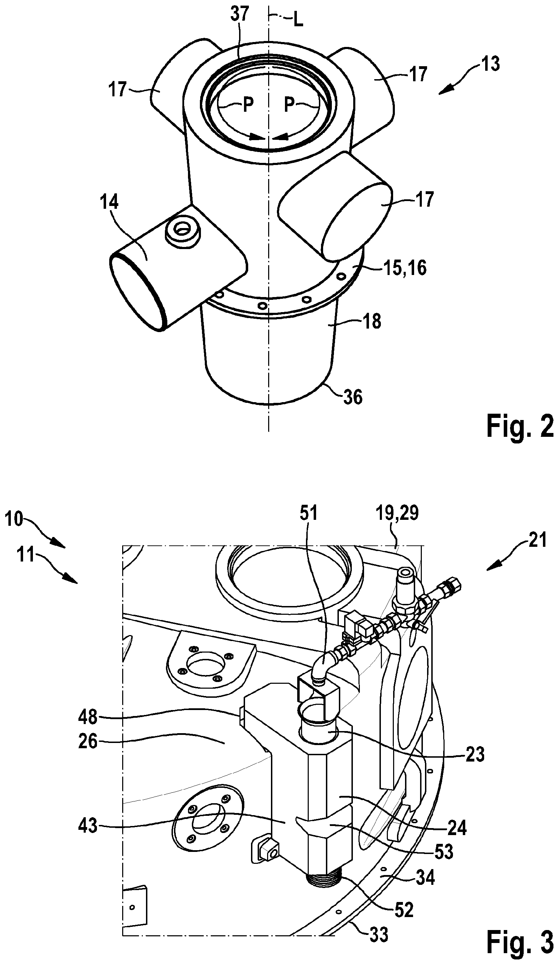

Die Abscheideeinrichtung 10 gemäß Fig. 1 weist ferner eine Zulaufeinrichtung 13 mit einem Zulaufanschluss 14 auf, die mit dem Innenraum 12 des Behälters 11 zur Aufnahme von zu reinigendem Abwasser fluidverbunden ist. Die Zulaufeinrichtung 13 ist in Fig. 2 gezeigt. Die Zulaufeinrichtung 13 weist eine Längsachse L auf. Die Zulaufeinrichtung 13 ist bei einer Montage an den Behälter 11 um ihre Längsachse L drehbar. Der Zulaufanschluss 14 ist zur Längsachse L senkrecht verlaufend angeordnet. Mit anderen Worten ist der Zulaufanschluss 14 zur Längsachse L orthogonal angeordnet. Der Zulaufanschluss 14 ist durch Drehung der Zulaufeinrichtung 13, insbesondere bei der Montage, an drei unterschiedliche Drehpositionen A, B, C bringbar. Mit anderen Worten kann der Zulaufanschluss 14 durch Drehung der Zulaufeinrichtung 13 um die Längsachse L an einer der drei unterschiedlichen Drehpositionen A, B, C ausgerichtet werden.

Wie in Fig. 1 gut zu erkennen, umfasst die Abscheideeinrichtung 10 eine Befestigungseinrichtung 15, die die Zulaufeinrichtung 13 an dem Behälter 15 befestigt. Konkret fixiert die Befestigungseinrichtung 15 die Zulaufeinrichtung 13 an einem Behälterkopf 19 des Behälters 11. Der Behälterkopf 19 ist das Kopfsegment 29. Auf die Befestigungseinrichtung 15 wird später näher eingegangen.

Im befestigten Zustand der Zulaufeinrichtung 13 ist der Zulaufanschluss 14 an einer der drei unterschiedlichen Drehpositionen A, B, C bezogen auf die Längsachse L fixiert. Im konkreten Fall ist der Zulaufanschluss 14 an der zweiten Drehposition B angeordnet, die eine der drei unterschiedlichen Drehpositionen A, B, C ist (vgl. Fig. 1).

Die drei unterschiedlichen Drehpositionen A, B, C liegen um die Längsachse L in einem ersten Winkelbereich von 0° bis 180°. Die erste Drehposition A entspricht dabei der 0°-Position, die zweite Drehposition B der 90°-Position und die dritte Drehposition der 180°-Position. Innerhalb des ersten Winkelbereichs sind jeweils zwei benachbarte Drehpositionen A, B, C in Bezug auf die Längsachse L um 90° drehversetzt. Des Weiteren liegen die drei unterschiedlichen auf einer ersten Ebene (nicht dargestellt), die senkrecht zur Längsachse L ausgerichtet ist. Gemäß Fig. 1 und 2 umfasst die Zulaufeinrichtung 13 mehrere Lüftungsanschlüsse 17. Konkret weist die Zulaufeinrichtung 13 insgesamt drei Lüftungsanschlüsse 17 auf, die um die Längsachse L verteilt angeordnet sind. Die drei Lüftungsanschlüsse 17 liegen auf einer zweiten Ebene (nicht dargestellt), die senkrecht zur Längsachse L ausgerichtet ist. Die zweite Ebene ist von der ersten Ebene entlang der Längsachse L beabstandet. In Einbaulage ist die zweite Ebene von der ersten Ebene höhenversetzt. Mit anderen Worten sind die Lüftungsanschlüsse 17 in Einbaulage von dem Zulaufanschluss 14 höhenversetzt. Die Lüftungsanschlüsse 17 befinden sich dabei oberhalb des Zulaufanschlusses 14.

Die drei Lüftungsanschlüsse 17 sind um die Längsachse L in einem zweiten Winkelbereich von 0° bis 180° angeordnet, der zum ersten Winkelbereich um 180° um die Längsachse L versetzt ist. Mit anderen Worten ist der zweite Winkelbereich dem ersten Winkelbereich an der Längsachse L gegenüber vorgesehen. Innerhalb des zweiten Winkelbereichs sind jeweils zwei der Lüftungsanschlüsse 17 um 90° um die Längsachse L voneinander versetzt. Konkret decken sich zwei der Lüftungsanschlüsse 17 in ihren Drehpositionen mit den zwei Drehpositionen A, C des Zulaufanschlusses 14 entlang der Längsachse L. Der weitere der drei Lüftungsanschlüsse 17 ist mit dem Zulaufanschluss 14 in einer gemeinsamen Ebene liegend angeordnet. Der weitere Lüftungsanschluss 17 ist im zweiten Winkelbereich zwischen den beiden anderen der drei Lüftungsanschlüsse 17 angeordnet. Mit anderen Worten ist der weitere Lüftungsanschluss 17 an der Längsachse L dem Zulaufanschluss 14 gegenüber und entlang der Längsachse L versetzt angeordnet.

Gemäß Fig. 1 ist eine der drei möglichen Drehpositionen des Zulaufanschlusses 14 gezeigt, wobei der weitere der drei Lüftungsanschlüsse 17 mit dem Innenraum 12 des Behälters 11 zur Durchlüftung fluidverbunden ist. Der Zulaufanschluss 14 befindet sich gemäß Fig. 1 im befestigten Zustand der Zulaufeinrichtung 13 an dem Behälter 11 an der zweiten Drehposition B um die Längsachse L. Eine Anordnung des Zulaufanschlusses 14 an einer der beiden weiteren Drehpositionen A, C ist nach lösen der Befestigungseinrichtung 15 möglich. Die Bewegungsrichtungen bei der Drehung der Zulaufeinrichtung 13 ist in Fig. 2 durch die beiden Pfeile P dargestellt.

Bei der Zulaufeinrichtung 13 ist für jede unterschiedlichen Drehposition A, B, C einer der drei Lüftungsanschlüsse 17 vorgesehen, sodass an jeder Drehposition A, B, C einer der drei Lüftungsanschlüsse 17 mit dem Innenraum 12 des Behälters 11 fluidverbunden ist.

Wie in Fig. 1 und 2 zu erkennen ist, weist die Zulaufeinrichtung 13 ein Behältereinlaufrohr 18 auf, an dem der Zulaufanschluss 14 und die drei Lüftungsanschlüsse 17 angeordnet sind. Die Längsachse 17 der Zulaufeinrichtung 13 ist die Mittelachse des Behältereinlaufrohres 18. Der Zulaufanschluss 14 und die drei Lüftungsanschlüsse 17 sind jeweils rohrförmig ausgebildet, wobei jeder der Anschlüsse 14, 17 in das Behältereinlaufrohr 18 mündet. Das Behältereinlaufrohr 18 verläuft zu den Anschlüssen 14, 17 orthogonal. Im Betrieb sind die beiden Lüftungsanschlüsse 17, die nicht an den Behälter 11 zur Durchlüftung angeschlossen sind, mit einem Blinddeckel versehen.

An dem Behältereinlaufrohr 18 ist die vorgenannte Befestigungseinrichtung 15 angeordnet. Konkret ist die Befestigungseinrichtung 15 durch einen Flansch 16 gebildet, der an dem Außenumfang des Behältereinlaufrohrs 18 angeordnet ist. Der Flansch 16 umlauf das Behältereinlaufrohr 18 vollständig. Über den Flansch 16 ist das Behältereinlaufrohr 18 im befestigten Zustand der Zulaufeinrichtung 13 mit einem ersten Behälteranschluss 35 des Behälters 11 fest verbunden. Der Flansch 16 weist ein Lochbild auf, das mit einem Lochbild des ersten Behälteranschlusses 35 übereinstimmt. Dadurch ist die Zulaufeinrichtung 13 an der jeweiligen Drehposition A, B, C des Zulaufanschlusses 14 ohne großen Aufwand und mit hoher Genauigkeit fixierbar.

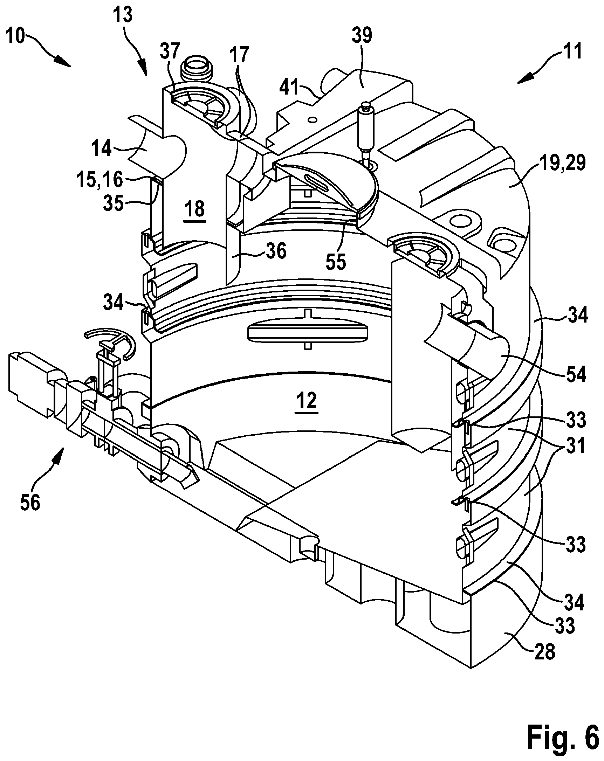

Der Flansch 16 ist von einem ersten freien Ende 36 des Behältereinlaufrohres 18 beabstandet. Im befestigten Zustand ragt das Behältereinlaufrohr 18 mit dem ersten freien Ende 36 in den Innenraum 12 des Behälters 11 ein. Dies ist in der in Fig. 6 gezeigten Schnittansicht der Abscheideeinrichtung 10 gut erkennbar. An einem zweiten freien Ende 37 des Behältereinlaufrohres 18 ist ein Deckel 38 vorgesehen, der das Behältereinlaufrohr 18 verschließt. Das zweiten freie Ende 38 ist dem ersten freien Ende 36 gegenüber angeordnet.

In den Fig. 1 und 6 ist gezeigt, dass der Behälterkopf 19 einen Absatz 38 aufweist, in dem die Zulaufeinrichtung 13 versenkt angeordnet ist. Der Absatz 38 bildet in Einbaulage ausgehend von einer Oberkante 39 des Behälterkopfs 19 eine Stufe in Behälterlängsrichtung. Der Absatz 38 weist eine Seitenwand 41 und einen Absatzboden 42 auf. Die Seitenwand 41 ist in Einbaulage im Wesentlichen senkrecht ausgebildet, wobei der Absatzboden 42 dazu orthogonal verläuft. Die Seitenwand 41 definiert einen maximalen Schwenkbereich, insbesondere den ersten Winkelbereich, in dem der Zulaufanschluss 14 um die Längsachse L verschwenkbar ist. Die Seitenwand 41 des Absatzes 38 verläuft in Einbaulage parallel zur Längsachse L. Im befestigten Zustand ist einer der drei Lüftungsanschlüsse 17 über die Seitenwand 41 des Absatzes 38 mit dem Innenraum 12 des Behälters verbunden.

Gemäß Fig. 1 umfasst die Abscheideeinrichtung 10 des Weiteren eine Versorgungseinheit 21 zum Versorgen des Behälters 11 mit Frischwasser. Die Versorgungseinheit 21 kann generell auch als Fülleinheit zum Befüllen des Behälters 11 bezeichnet werden. In Fig. 3 ist ein Detailausschnitt des Kopfsegments 29 bzw. des Behälterkopfs 19 der Abscheideeinrichtung 10 gemäß Fig. 1 mit der Versorgungseinheit 21 gezeigt. Die Versorgungseinheit 21 weist einen Frischwasseranschluss 23 und eine Siphoneinrichtung 24 auf, die den Frischwasseranschluss 23 mit dem Innenraum 12 des Behälters 11 fluidverbindet. Auf den Frischwasseranschluss 23 wird später näher eingegangen.

Die Siphoneinrichtung 24 umfasst einen Behälteranschluss 25 zur Verbindung mit dem Behälter 11 und einen Siphon 27, der zwischen dem Behälteranschluss 25 und dem Frischwasseranschluss 23 ausgebildet ist. Die Siphoneinrichtung 24 ist hakenförmig ausgebildet. Konkret weist die Siphoneinrichtung 24 einen Siphonkörper 43 auf, der hakenförmig ausgebildet ist. Der Siphonkörper 43 weist einen Siphoninnenraum 44 auf, in den ein Zulaufelement 45 einragt. Das Zulaufelement 45 ist Teil des Siphonkörpers 43 und überragt mit einem innen angeordneten freien Ende 46 eine Überlaufkante 47 des Siphonkörpers 43. Dadurch taucht im Betrieb das Zulaufelement 45 in ein ständig vorhandenes Wasservolumen ein, das zwischen dem Behälteranschluss 25 und dem Zulaufelement 45 besteht. Dadurch wird verhindert, dass unangenehme Gerüche aus dem Innenraum 12 des Behälters 11 durch das Zulaufelement 45 und den Frischwasseranschluss 23 nach außen gelangen können.

Der Behälteranschluss 25 ist am Siphonkörper 43 angeordnet und verläuft in Einbaulage nach unten. Konkret ist der Behälteranschluss 25 an einem Schenkel des Siphonkörpers 43 angeordnet. Der Behälteranschluss 25 ist rohrförmig ausgebildet. Dieser kann im montierten Zustand eine Dichtung zur Abdichtung gegen den Behälter 11 aufnehmen.

Wie in den Fig. 1 und 3 erkennbar ist, weist der Behälterkopf 19 eine Vertiefung 48, in der eine nicht dargestellte Durchgangsöffnung in den Innenraum 12 des Behälters 11 angeordnet ist. Die Vertiefung 48 ist in einer Wandung 26 des Behälterkopfs 19 ausgebildet. Der Behälteranschluss 25 ist in die Durchgangsöffnung des Behälterkopfs 19 eingesteckt, sodass die Siphoneinrichtung 24 am Behälter 11 gehalten wird. In Einbaulage ist die Siphoneinrichtung 24 oben am Behälterkopf 19 über den Behälteranschluss 25 eingesteckt und hängt am Außenumfang des Behälterkopfs 19 nach unten. Zur Lagefixierung ist die Siphoneinrichtung 24 durch ein Befestigungsmittel, im konkreten eine Schraube, am Außenumfang mit dem Behälterkopf 19 verbunden. Dies ist in Fig. 3 zu erkennen. Bei der Montage wird die Siphoneinrichtung 24 werkzeuglos mit dem Behälteranschluss 25 in die Durchgangsöffnung des Behälterkopfs 19 eingesteckt. Durch den Behälteranschluss 25 ist die Siphoneinrichtung 24 mit dem Behälterkopf 19 formschlüssig verbunden.

Der vorgenannte Frischwasseranschluss 23 weist, wie in Fig. 3 gezeigt, ein Einsteckrohr 49 auf, das in das Zulaufelement 45 des Siphonkörpers 43 einragt. Das Einsteckrohr 49 nimmt im Betrieb Frischwasser von einer Zulaufarmatur 51 auf und führt dieses in den Siphoninnenraum 44. Das Einsteckrohr 49 weist einen trichterförmigen Abschnitt zur Aufnahme des Frischwassers auf. Zur Abdichtung des Siphoninnenraums 44 ist zwischen dem Einsteckrohr 49 und dem Siphonkörper 43 eine Dichtung, insbesondere ein O-Ring angeordnet.

Oberhalb des Einsteckrohr 49 ist ein U-förmiges Schutzelement 52 angeordnet, das ein seitliches Einragen eines Störteils in den Bereich zwischen der Zulaufarmatur 51 und dem Einsteckrohr 49 verhindert. Dadurch kann das von der Zulaufarmatur 51 in das Einsteckrohr 49 fließende Wasser ohne Störung frei einlaufen.

Die Siphoneinrichtung 24 weist einen weiteren Anschluss 52 auf, der am Siphonkörper 43 an einem weiteren Schenkel angeordnet ist. Der weitere Anschluss 52 dient zur Versorgung einer Reinigungspumpe 22 mit Frischwasser, die in Fig. 1 seitlich am Außenumfang des Behälters 11 ersichtlich ist.

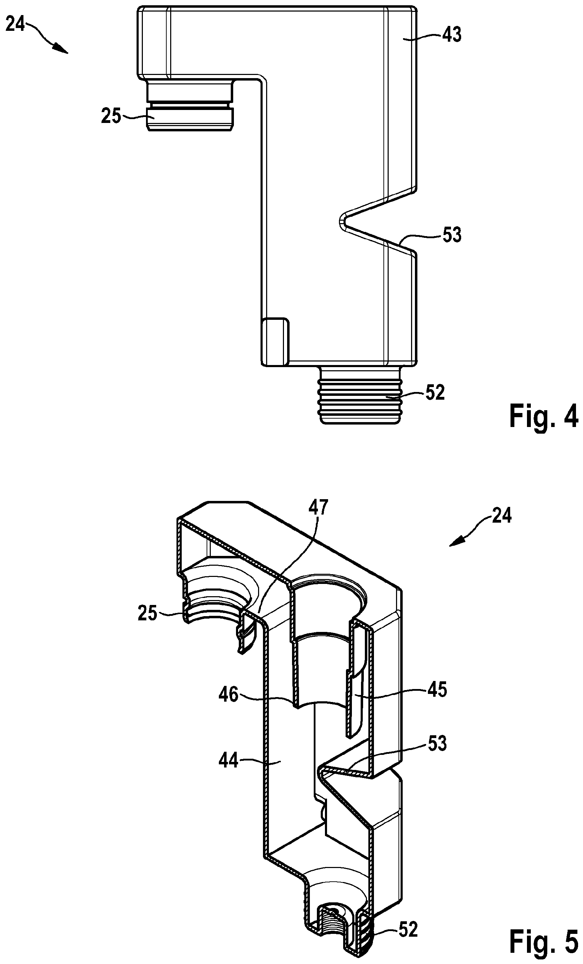

Wie in Fig. 5 gezeigt ist, weist der Siphonkörper 43 zwischen dem weiteren Anschluss 52 und dem freien Ende 46 des Zulaufelements 45 eine Leitkontur 53 zur Strömungsführung auf, die sich in den Siphoninnenraum 44 erstreckt. Dadurch wird in den Siphoninnenraum 44 einströmendes Frischwasser umgeleitet und somit verhindert, dass es in diesem Bereich zu einem Wasserrückstau durch den Frischwasserzulauf kommt.

Fig. 6 zeigt eine Schnittansicht der Abscheideeinrichtung 10 gemäß Fig. 1. In dieser ist erkennbar, dass die Abscheideeinrichtung 10 eine Ablaufeinheit 54 zum Abführen von gereinigtem Abwasser aus dem Innenraum 12 aufweist. Ferner ist in Fig. 6 sowie Fig. 1 erkennbar, dass der Behälter 11 am Behälterkopf 19 eine Zugangsöffnung 55 aufweist, die durch einen Deckel verschlossen ist.

Des Weiteren weist die Abscheideeinrichtung 10 eine Bodenentleervorrichtung 56 auf, die am Bodensegment 28 außen angeordnet ist und mit einem Bodenbereich des Innenraums 12 fluidverbunden ist. Zusätzlich ist bei der Abscheideeinrichtung 10 der Behälter 11 mit einem Schauglas 57 versehen, durch das der Innenraum 12 des Behälters 11 von außen einsehbar ist. Das Schauglas 57 ist vollständig von außerhalb des Behälters 11 montierbar. Der Montageaufwand ist hier dadurch verringert.

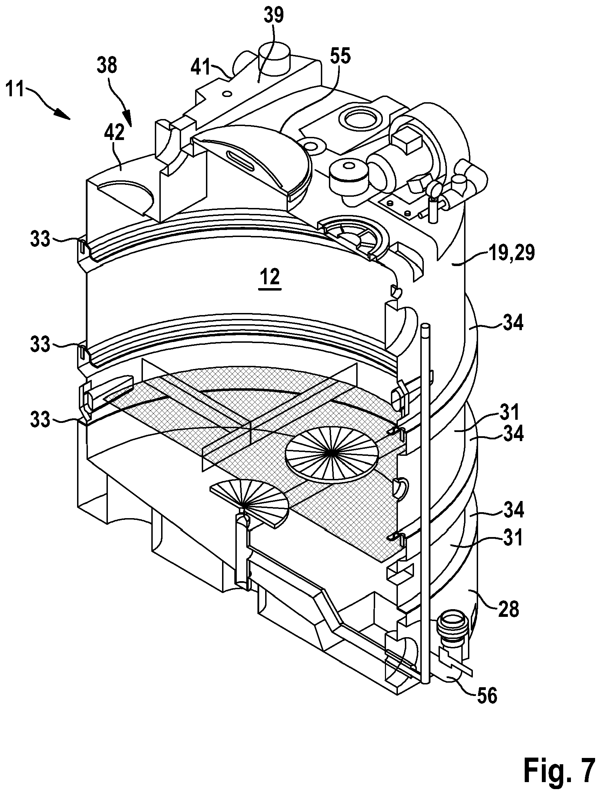

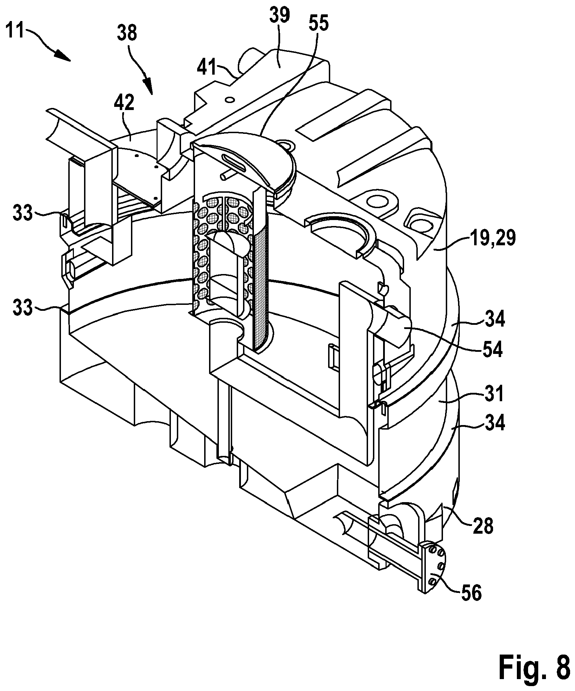

Die Fig. 7 und 8 zeigen einen Behälter 11 nach einem erfindungsgemäßen Ausführungsbeispiel, wobei der Behälter 11 wie in den Fig. 1 und 6 der Abscheideeinrichtung 10 gemäß Fig. 1 beschrieben ausgestaltet ist. Bei dem Behälter 11 gemäß Fig. 7 und 8 fehlen die vorstehend beschrieben Zulaufeinrichtung 13 und die Versorgungseinheit 21. Derartige Behälter 11 können als Biologiebehälter und/oder Regenwasserbehälter verwendet werden. Andere Anwendungen sind möglich.

Der Behälter 11 gemäß Fig. 1 und 6 sowie der Behälter 11 gemäß Fig. 7 und 8 ist in Einbaulage stehend angeordnet. Mit anderen Worten ist in Einbaulage der Behälterkopf 19 oben angeordnet. In Einbaulage des Behälters 11 ist in Vertikalrichtung das Kopfsegment 29 somit oberhalb und das Bodensegment 28 unterhalb des jeweiligen Zwischensegments 31 bzw. der Zwischensegmente 31 angeordnet. Der Behälter 11 gemäß Fig. 1 und 6 bis 8 ist im Wesentlichen zylindrisch, insbesondere rund ausgebildet. Die einzelnen Segmente 28, 29, 31 sind miteinander fluidabdichtend lösbar verbunden.

### Bezuaszeichenliste

- 10: Abscheideeinrichtung
- 11: Behälter
- 12: Innenraum
- 13: Zulaufeinrichtung
- 14: Zulaufanschluss
- 15: Befestigungseinrichtung
- 16: Flansch
- 17: Lüftungsanschluss
- 18: Behältereinlaufrohr
- 19: Behälterkopf
- 21: Versorgungseinheit
- 22: Reinigungspumpe
- 23: Frischwasseranschluss
- 24: Siphoneinrichtung
- 25: Behälteranschluss
- 26: Wandung
- 27: Siphon
- 28: Bodensegment
- 29: Kopfsegment
- 31: Zwischensegment
- 32: -
- 33: offene Enden
- 34: Verbindungsstelle
- 35: erster Behälteranschluss
- 36: erstes freies Ende
- 37: zweites freies Ende
- 38: Absatz
- 39: Oberkante
- 41: Seitenwand des Absatzes
- 42: Absatzboden
- 43: Siphonkörper
- 44: Siphoninnenraum
- 45: Zulaufelement
- 46: freies Ende
- 47: Überlaufkante
- 48: Vertiefung
- 49: Einsteckrohr
- 51: Zulaufarmatur
- 52: weiterer Anschluss
- 53: Leitkontur
- 54: Ablaufeinheit
- 55: Zugangsöffnung
- 56: Bodenentleervorrichtung
- 57: Schauglas
- A, B, C: Drehpositionen
- L: Längsachse
- P: Pfeile

## Patentansprüche

1. Abscheideeinrichtung (10) zum Reinigen einer Flüssigkeit, insbesondere zum Abscheiden von Flüssigkeitsbestandteilen aus einem Flüssigkeitsgemisch, umfassend:
- wenigstens einen Behälter (11) mit einem Innenraum (12) zur Aufnahme von zu reinigender Flüssigkeit;
- wenigstens eine Zulaufeinrichtung (13) mit einer Längsachse (L), die mit dem Innenraum (12) des Behälters (11) zur Flüssigkeitsaufnahme fluidverbunden ist und um ihre Längsachse (L) drehbar ist, wobei die Zulaufeinrichtung (13) wenigstens einen Zulaufanschluss (14) aufweist, der sich geneigt zur Längsachse (L) erstreckt und durch Drehung der Zulaufeinrichtung (13) in unterschiedliche Drehpositionen (A, B, C) bringbar ist; und
- wenigstens eine Befestigungseinrichtung (15), insbesondere einen Flansch (16), zum Befestigen der Zulaufeinrichtung (13) an dem Behälter (11), wobei
im befestigten Zustand der Zulaufeinrichtung (13) der Zulaufanschluss (14) an einer der unterschiedlichen Drehpositionen (A, B, C) fixiert ist.

2. Abscheideeinrichtung nach Anspruch 1,
**dadurch gekennzeichnet, dass**
die Zulaufeinrichtung (13) um die Längsachse (L) derart drehbar ist, dass der Zulaufanschluss (14) an wenigstens zwei, insbesondere drei, Drehpositionen (A, B, C) fixierbar ist.

3. Abscheideeinrichtung nach Anspruch 1 oder 2,
**dadurch gekennzeichnet, dass**
der Zulaufanschluss (14) im ausgerichteten Zustand an einer der unterschiedlichen Drehpositionen (A, B, C) angeordnet ist, die zu wenigstens einer benachbarten Drehposition im Wesentlichen um 90° drehversetzt ist.

4. Abscheideeinrichtung nach einem der vorhergehenden Ansprüche, **dadurch gekennzeichnet, dass**
die Zulaufeinrichtung (13) wenigstens einen Lüftungsanschluss (17) aufweist, der im ausgerichteten Zustand des Zulaufanschlusses (14) mit dem Innenraum (12) des Behälters (11) zur Durchlüftung fluidverbunden ist.

5. Abscheideeinrichtung nach einem der vorhergehenden Ansprüche, insbesondere nach Anspruch 4,
**dadurch gekennzeichnet, dass**
die Zulaufeinrichtung (13) wenigstens ein Behältereinlaufrohr (18) aufweist, das die Längsachse (L) umfasst und an dem der Zulaufanschluss (14) und/oder der Lüftungsanschluss (17) angeordnet sind/ist.

6. Abscheideeinrichtung nach einem der vorhergehenden Ansprüche, **dadurch gekennzeichnet, dass**
der Behälter (11) einen Behälterkopf (19), insbesondere ein Kopfsegment (29), mit wenigstens einen Absatz (38) aufweist, in dem die Zulaufeinrichtung (13) zumindest teilweise versenkt angeordnet ist.

7. Abscheideeinrichtung nach Anspruch 6,
**dadurch gekennzeichnet, dass**
der Absatz derart ausgebildet ist, dass der Zulaufanschluss (14) in einem Drehbereich von 0° bis 180° um die Längsachse (L) verschwenkbar ist.

8. Abscheideeinrichtung nach einem der vorhergehenden Ansprüche,
**gekennzeichnet durch**,
wenigstens eine Versorgungseinheit (21) zum Versorgen des Behälters (11) und/oder wenigstens einer weiteren Komponente, insbesondere eine Reinigungspumpe (22), mit Frischwasser, die wenigstens einen Frischwasseranschluss (23) und eine Siphoneinrichtung (24) aufweist, durch die der Frischwasseranschluss (23) mit dem Innenraum (12) des Behälters (11) flüssigkeitsübertragend verbunden ist.

9. Abscheideeinrichtung nach Anspruch 8,
**dadurch gekennzeichnet, dass**
die Siphoneinrichtung (24) wenigstens einen Behälteranschluss (25) aufweist, der durch den die Siphoneinrichtung (24) mit dem Behälter (11) formschlüssig verbunden ist.

10. Abscheideeinrichtung nach Anspruch 8 oder 9,
**dadurch gekennzeichnet, dass**
die Siphoneinrichtung (24) durch den Behälteranschluss (25) werkzeuglos in eine Wandung (26) des Behälters (11), insbesondere in den Behälterkopf (19), einsteckbar oder eingesteckt ist.

11. Abscheideeinrichtung nach einem der Ansprüche 8 bis 10,
**dadurch gekennzeichnet, dass**
der Frischwasseranschluss (23) in die Siphoneinrichtung (24) zumindest teilweise einragt, wobei die Siphoneinrichtung (24) einen Siphon (27) umfasst, der zwischen dem Frischwasseranschluss (23) und dem Behälteranschluss (25) angeordnet ist.

12. Abscheideeinrichtung nach einem der vorhergehenden Ansprüche,
**dadurch gekennzeichnet, dass**
der Behälter (11) ein Bodensegment (28), ein Kopfsegment (29), das insbesondere den Behälterkopf (19) bildet, und wenigstens ein dazwischen angeordnetes Zwischensegment (31) aufweist, die eine gemeinsame Längsachse umfassen und den Innenraum (12) des Behälters (11) fluidabdichtend umschließen, wobei die Zulaufeinrichtung (13) an wenigstens einem der Segmente (28, 29, 31) angeordnet ist.

13. Abscheideeinrichtung nach Anspruch 12,
**dadurch gekennzeichnet, dass**
das Bodensegment (28) und/oder das Kopfsegment (29) und/oder das Zwischensegment (31) jeweils rotationsgeformt sind.

14. Verfahren zur Montage einer Abscheideeinrichtung (10) nach einem der vorhergehenden Ansprüche, bei dem die Zulaufeinrichtung (13) an dem Behälter (11) angeordnet wird und anschließend um ihre Längsachse (L) derart gedreht wird, dass der Zulaufanschluss (14) in eine der unterschiedlichen Drehpositionen (A, B, C) gebracht wird, wobei an der Drehposition des Zulaufanschlusses (14) die Zulaufeinrichtung (13) durch die Befestigungseinrichtung (15) an dem Behälter (11) fixiert wird.

15. Behälter (11) für eine Abscheideeinrichtung (10) zur Aufnahme und Abgabe von Flüssigkeiten, insbesondere nach einem der Ansprüche 1 bis 13, umfassend:
- ein Bodensegment (28), ein Kopfsegment (29) und wenigstens ein dazwischen angeordnetes Zwischensegment (31), die eine gemeinsame Längsachse umfassen und einen Innenraum (12) des Behälters (11) umschließen;
- wenigstens einen Zulaufanschluss (14) und wenigstens einen Ablaufanschluss, die jeweils mit dem Innenraum (12) fluidverbunden sind, um Flüssigkeiten zuzuführen und aus diesem abzuführen; und
- wenigstens einen Funktionsanschluss für Funktionsmittel, insbesondere für eine Geruchsverschlusseinrichtung,
**dadurch gekennzeichnet, dass**
das Bodensegment (28), das Kopfsegment (29) und das Zwischensegment (31) jeweils rotationsgeformt sind und an jeweils einem entlang der Längsachse (L) offenen Ende (33) mit dem benachbarten Segment (28, 29, 31) fluidabdichtend lösbar verbunden sind.
